# EUROPEAN PATENT APPLICATION

(11) **EP 3 332 936 A1**
(43) Date of publication of application: **13.06.2018**
(21) Application number: 16202723.9
(22) Date of filing: 07.12.2016
(51) Int. Cl.: B29C 45/00, B29C 45/73

(54) **METHOD FOR PRODUCING AN INJECTION MOULDED PRODUCT WITH A HIGHER RIB-TO-WALL THICKNESS RATIO**

(71) Applicant: Letoplast Invest NV, 8530 Harelbeke (BE)
(72) Inventor: Soete, Tom, 67972 Kunstat (CZ)
(74) Representative: IP HILLS NV

(57) **Abstract**

There is described a method for producing an injection moulded product (10) comprising a wall (20) and, extending from said wall (20), at least one rib (30) or boss (40). The method comprises the step of producing by means of a variable temperature cycle moulding process (100) the injection moulded product (10) comprising at least one rib (30) or boss (40) with a rib-to-wall thickness ratio (50) of up to at least 250% without causing one or more sink marks (60) visible with the naked eye.

## Description

### Technical Field

The present invention relates to a method for producing an injection moulded product with a higher rib-to-wall thickness ratio and an injection moulded product produced according to such a method.

### Background

Injection moulding is a manufacturing process for producing injection moulded products by injecting material into a mould. Although injection moulding can be performed with a lot of different materials, such as for example metals, glasses, elastomers, etc., and most commonly thermoplastic and thermosetting polymers, the method according to the invention concerns injection moulding of thermoplastic polymers or resins.

Injection moulded products, manufactured by means of such an injection moulding manufacturing process, are generally in use in varying sizes, for example from small components such as mobile phone covers to large components such as for example Television set bodies, body panels of cars, etc.

It is generally known to man skilled in the art that injection moulded products must be carefully designed to facilitate the injection moulding manufacturing process and to avoid any undesired defects. One of these defects is for example known as sink marks or sinks. Such sink marks are local depressions on the surface of the injection moulded product. These sink marks are generally caused by local variations in wall thickness which causes variations in cooling rates and corresponding shrinkage. It is generally known to a man skilled in the art that there is a risk of such sink marks at a location where for example a rib or boss extends from the wall of an injection moulded product. Such ribs are for example desirable in order to increase structural rigidity of large components such as television set bodies or body panels of cars, etc. Bosses which extend from the wall of an injection moulded product are for example to provide a sufficiently robust anchor point for mounting means such as screws, bolts, etc.. It is a generally accepted design rule that, in order to avoid sink marks, a rib-to-wall thickness ratio of about half the thickness of the wall should be used, for example in the range of 40% to 60%, for example 50%. See for example www.protolabs.com/injection-molding/fundamentals-of-molding/wall-thickness-uniform, www.xcentricmold.com/design-guidelines/ribs-and-bosses.php, http://www.pitfallsinmolding.com/partdesign1.html, for confirmation of this rule of thumb generally accepted by a man skilled in the art.

In order to increase the structural rigidity for a given nominal wall thickness, and/or in order to reduce the weight while still ensuring the desired level of structural rigidity solutions have been sought to increase this rib-to-wall thickness ratio by either increasing rib thickness and/or to reduce wall thickness without having undesired effects like sinks.

One known solution, is for example, external gas assisted injection moulding. Such an external gas assisted injection moulding manufacturing process is for example described at www.mack.com/mack-blog/why-60-rib-to-wall-ratio-is-not-sacred/. According to such a manufacturing method, an inert gas, such as for example nitrogen gas is provided to the mould cavity at the non-cosmetic surface of the injection moulded product after the mould cavity was filled with thermoplastic resin. In this way the pressurized gas flows along the non-cosmetic surface, and the ribs extending thereof, and in this way forces the ribs in the direction of the cosmetic surface during cooling of the injected thermoplastic resin. From the above mentioned publication it is known that rib-to-wall thickness ratios of 100% can be obtained without inducing sink marks. However, this manufacturing process, as well as other gas assisted injection moulding techniques require complex adaptations to the design of the mould, increase complexity of the manufacturing process control systems, require the use of inert gas, etc., in order to achieve this effect. It is clear that this leads to an increase in complexity, duration, energy and gas consumption, etc. of the manufacturing process, thereby leading to a more expensive, less efficient and less environmentally friendly manufacturing process.

Other known solutions, making use of for example internal gas assisted injection moulding such as for example known from US6247220 or JP2004330676 , or making use of polymeric foaming such as for example known from WO02055284, etc. However any of these methods, although leading to an increase in rib-to-wall thickness ratio achievable without introducing sink marks, lead to the introduction of voids or hollows within the walls of the injection moulded product, thereby potentially compromising the structural integrity of these walls. Still further the internal voids created by the foamed resin or injected gas or bubbles thereof lead to the risk of such cavities reaching the surface or cell breakage of such cavities close to the surface, thereby leading to unacceptable surface defects in the injection moulded product. Additionally it is difficult to control or guarantee the form, shape and location of these voids, which potentially leads to uncontrolled tolerances with respect to the material properties of the injection moulded product produced in this way. Additionally as already mentioned above with respect to external gas assisted injection moulding, also here the manufacturing process will be more expensive, less efficient and less environmentally friendly.

Still a further manufacturing method is known from for example US9242400, in which the use of a temperature difference between the design surface of the mould and the non-design surface of the mould, combined with a applying a negative pressure to the resin within 7 seconds after completion of the injection filling, ensures that the sink marks do not appear at the design surface of the mould, but only at the non-design surface of the mould. As shown by means of this manufacturing process a rib-to-wall thickness of 2,0 mm over 1,5 mm, or 133% was achieved for a particular resin without the appearance of sink marks. However, the migration of sink marks to the non-design surface, as well as the application of negative pressure to the resin, increases the tolerances of the final injection moulded product with respect to the mould. Additionally, these tolerances are increased in a random uncontrolled way. This leads to an uncontrolled variation in the tolerances with respect to the desired shape and thus the structural integrity of the thus produced parts. Additionally the need to ensure a controllable temperature difference between both mould parts, which are in close proximity to each other, increases the complexity of the moulding process and related temperature control systems. Still further the need to enable a negative pressure in the resin also requires a more complex pressure control system for the associated injection moulding apparatus.

It is clear that still further variable temperature cycle moulding processes are known to a man skilled in the art in which during the moulding process cyclically the temperature of the mould for is actively heated and cooled. Some of these variable temperature cycle moulding processes make use of external heating elements, which preferably heat the mould cavity prior to injection of molten resin. The external heating elements could for example comprise a flame heater, an infrared or IR heater, an induction heater, etc. Other variable temperature cycle moulding processes make use of heating and/or cooling elements which are integrated into the mould. One example of the latter process is for example known as a rapid heating cycle moulding or RHCM or steam injection moulding makes use of channels which are provided into the mould close to the mould cavity, in which selectively steam and coolant liquid such as water or oil can be provided in order to respectively function as heating or cooling element during the variable temperature cycle moulding process. According to the RHCM process steam is injected into the channels in the mould at for example 160°C to heat the mould. When the mould reaches a predetermined temperature, for example 140°C, the resin is injected. Then cold water is immediately added to these channels in the mould for cooling the resin down to for example 40°C. As the mould is heated to such a high temperature when the resin is injected, weld lines can be prevented. Therefore, such RHCM processes are now extensively being used to produce for example front covers of flat screen television sets. It is clear that also alternative heating or cooling elements are known, such as for example electrical heaters, etc.

There still exists a need for an injection moulding manufacturing method and resulting injection moulded products which allows the rib-to-wall thickness ratio to be increased beyond the above mentioned limits, without the above mentioned drawbacks, thereby allowing for a more simple, efficient, environmentally friendly manufacturing method, which allows for a decrease in uncontrolled variations with respect to tolerances and structural integrity of the thus produced injection moulded products and allows for injection moulded products with a high quality appearance.

### Summary

According to a first aspect of the invention there is provided a method for producing an injection moulded product comprising a wall and, extending from said wall, at least one rib or boss, said method comprising the step of producing by means of a variable temperature cycle moulding process the injection moulded product comprising at least one rib or boss with a rib-to-wall thickness ratio of up to at least 250% without causing one or more sink marks visible with the naked eye.

In this way, contrary to the beliefs of the man skilled in the art, which based on the prior art rule of thumb of a rib-to-wall thickness ration of about 50% and the prior art teaching that higher rib-to-wall thickness ratios of 100% or 133% are only obtainable by means additional complicated measures, such as for example use of an inert gas or foaming, would not consider carrying out experiments with a rib-to-wall thickness ratio of up to at least 250%, which goes considerably beyond the prior art examples, without applying such additional complicated measures. However, surprisingly, it has been found that by applying a variable temperature cycle moulding process, a rib-to-wall thickness ratio of up to at least 250% can be obtained without causing one or more sink marks visible with the naked eye, nor any other cosmetic defects such as for example weld lines, etc. In this way, the above mentioned technical prejudices, as illustrated by means of the prior art solutions, are overcome, thereby leading to a simple, efficient and environmentally friendly method of manufacturing such an injection moulded product, as there is no need to make use of inert gas, foaming resins, complicated systems, etc. Additionally, in this way the method allows for the manufacturing of an injection moulded product with a high quality appearance and with a decrease in uncontrolled variations with respect to tolerances and structural integrity because the sink marks are reduced to a level at which they are not visible with the naked eye, no gas or foam is introduced in between the mould cavity and the resin injected in the mould cavity, nor in the resin of the injection moulded product itself.

According to an embodiment there is provided a method, wherein the step of the variable temperature cycle moulding process does not cause one or more sink marks of which the depth exceeds 0,02mm for the at least one rib or boss with a rib-to-wall thickness ratio of up to at least 250%.

It is clear that in this way the sink marks are not visible to the naked eye.

According to a further embodiment there is provided a method, wherein the step of the variable temperature cycle moulding process does not cause one or more sink marks of which the depth exceeds 0,02 mm for the at least one rib or boss with a rib-to-wall thickness ratio in the range of 0% to 250% and optionally even higher such as for example up to 275% or even 300%.

It is clear that this achieving this in the range of the rib-to-wall thickness ratio of for example 70% to 250% or higher this is surprising. Specifically in the range of the rib-to-wall thickness ratio of 150% to 250% or higher, achieving an injection moulded product without sink marks visible to the naked eye, is most surprising.

It is further clear that the ratio of the wall thickness of the rib or boss versus the wall thickness of the wall at a neighbouring location where the rib or boss is no longer present defines a rib-to-wall thickness ratio.

It is further clear that:
- the wall thickness of the wall at the location of a rib or boss is determined by the transverse distance between an exterior side and an interior side of the wall at the base of the rib or boss; and
- the wall thickness of the rib or the boss is determined as the transverse distance between both opposing sides of the rib which extend from the wall or the distance between an internal and opposing external face of the boss which extend from the wall.

According to a further embodiment there is provided a method, wherein the injection moulded product comprises one or more of the dimensional parameters:
- the wall thickness of the wall in the range of 0,6mm to 15mm, for example in the range of 1,5 mm to 5 mm, preferably in the range of 2 to 3 mm;
- the variation of the wall thickness of the wall with respect to the average wall thickness of the wall is in the range of 5% to 50%;
- the distance over which the rib or boss extends from the wall is larger than 100%, preferably larger than 300%, for example 500% of the wall thickness of the wall.

In this way, relatively large injection moulded products can be produced for which the structural rigidity can be maximized and/or the weight can be minimized. This is particularly advantageous, when the injection moulded product is for example a car panel, a television cover, etc. in which weight reduction is limited by the need to provide sufficiently large structural elements such as ribs or sufficiently large mounting elements such as bosses without the risk of causing defects such as sink marks.
According to still a further advantageous embodiment the method makes use of a mould comprising mould parts or other moulding tools which are manufactured at least partially or entirely by means of a three dimensional printing process, or any other suitable similar additive manufacturing process. Such three dimensional printing process, or any other suitable additive manufacturing process allows for a further increase in the rib-to-wall thickness ratio, as in moulds manufactured in this way cooling channels can be provided closer to the surface of the mould cavity, even if the surface of the mould cavity for example comprises a curved or complex shape. Thereby the efficiency of the heating or cooling medium flowing through these channels is still further increased. This leads to a still further increase in the achievable rib-to-wall thickness ratios without leading to sink marks or other defects and a still further increase in efficiency of the with respect to the moulding process as for example the faster cooling and heating can lead to reduced duration of the injection moulding cycle. According to such a further embodiment, there is provided an injection moulding assembly comprising a first mould part and/or a second mould part comprising channels which are manufactured by means of an additive manufacturing process, preferably a three dimensional printing process, for use during the method for producing an injection moulded product.

According to a further embodiment there is provided a method, wherein the moulded product comprises an exterior side and an opposing interior side from which the at least one rib or boss extends, and
wherein no sink marks visible to the naked eye are caused by the method at both the exterior side and the interior side, and
wherein the mould comprises a first mould part comprising a first mould cavity part of the mould cavity for the exterior side and a second mould part comprising a second mould cavity part of the mould cavity for the interior side.

In this way the sink marks, instead of being merely migrated from one side of the injection moulded product to the other, are reduced to an extent that they are no longer visible with the naked eye and thereby a decrease of tolerances with respect to the desired shape of the injection moulded product without compromising the structural rigidity of the injection moulded product or introducing big additional complexity into the moulding process and the moulding apparatus is obtained.

According to a further embodiment there is provided a method, wherein the at least one rib or boss only extends from the wall at the interior side, and wherein at the exterior side of the wall comprises a smooth, continuous surface without extensions which extend more than 5% from surrounding surface.

In this way injection moulded products for use as a cover for a device such as for example a television, electronic devices, industrial man machine interfaces, interior and exterior vehicle covers, bumpers, etc. can be advantageously manufactured without compromising the visual appearance of the exterior side of the injection moulded product and thus without the need of additional finishing manufacturing operations. Such method is further particularly advantageous when producing such injection moulded products which are plastic parts that are subsequently covered with paint or another suitable cosmetic finishing layer, such as for example a textile layer, leather, a thermoplastic elastomer or TPE layer, etc. Such a finishing layer, which is applied for cosmetic reasons, such as for example to establish the desired appearance of an interior of a vehicle, surprisingly, in most cases such leads to a visual appearance in which the visual defects are further emphasized or aggravated after application of such a finishing layer during such a subsequent finishing manufacturing operation, instead of hiding these sink marks or other visual defects in the injection moulded product without the finishing layer.

According to a further embodiment, there is provided a method, wherein the heating and cooling elements are formed by means of channels arranged in the mould through which respectively:
- a cooling medium can flow when acting as cooling element, and
- a heating medium can flow when acting as heating element,
whereby the cooling medium preferably comprises water in its liquid state and the heating medium preferably comprises steam.

According to a further embodiment there is provided a method, wherein the channels are arranged in the first mould part and/or in the second mould part at a maximum distance of 15 mm of the mould cavity, preferably a distance of 5 mm.

In this way the efficiency of the advantageous effect of the heating and cooling channels on the resin in the mould cavity during the mould cycle is increased in a simple way.

According to still a further embodiment there is provided a method, wherein the thermoplastic material comprises one or more of the following:
- Polycarbonate or PC with or without additives;
- Acrylonitrile butadiene styrene or ABS with or without additives ;
- Styrene acrylonitrile copolymers or SAN
- A composition comprising polycarbonate and acrylonitrile butadiene styrene with or without additives or a PC/ABS composition;
- A composition comprising polycarbonate and polyethylene terephthalate with or without additives or a PC/PET composition;
- A composition comprising polybutylene terephthalate and polyethylene terephthalate with or without additives;
- Polyamide or PA;
- Polystyrene or PS;
- Polypropylene or PP;
- Polyoxymethylene or POM;
- Poly(methyl methacrylate) or PMMA;
- Acrylonitrile Styrene Acrylate or ASA;
- Poly(p-phenylene oxide) or poly(p-phenylene ether) or PPE;
- EMERGE PC/ABS 7570 Advanced Resin as manufactured by Trinseo;
- EMERGE PC 8702-15 Advanced Resin as manufactured by Trinseo;
- EMERGE PC/ABS 7700 Advanced Resin as manufactured by Trinseo.

Best results can be achieved with EMERGE PC/ABS 7570 Advanced Resin as manufactured by Trinseo.

According to a further embodiment there is provided a method, wherein the variable temperature cycle moulding process comprises an injection moulding cycle comprising the following consecutive phases:
- a pre-injection phase before molten thermoplastic material is injected in a mould cavity of a mould for forming the moulded product;
- an injection phase during which molten thermoplastic material is injected in the mould cavity of the mould
- a cooling phase during which the thermoplastic material injected in the mould cavity of the mould is allowed to at least partially set.
- an ejection phase during which the at least partially set thermoplastic material is ejected from the mould cavity of the mould,
whereby heating and cooling elements are arranged in the mould in the vicinity of the mould cavity configured to controllably heat and cool the mould during the injection moulding cycle, such that:
- during the pre-injection phase the heating elements heat the mould to a temperature of at least a high temperature threshold;
- during at least a part of the injection phase the heating elements keep the mould at a temperature above the high temperature threshold
- during the cooling phase the cooling elements cool the mould to a temperature of at least a low temperature threshold.

According to a further embodiment there is provided a method, wherein the injection moulding cycle makes use of one or more of the following operational parameters:
- the duration of the pre-injection phase is in the range of 3s to 35s;
- the duration of the injection phase is in the range of 2,5s to 5s;
- the duration of the cooling phase is in the range of 10s to 35s;
- the duration of the ejection phase is in the range of 1 s to 20s;
- the high temperature threshold is the gass transition temperature or Tg of the thermoplastic material increased by at least 5°C, preferably increased by a value in the range of 10°C to 15°C or more;
- the low temperature threshold is the glass transition temperature of the thermoplastic material decreased by at least 10°C, preferably decreased by a value in the range of 15°C to 40°C or more.

Although alternative embodiments are possible, as the glass transition temperature or Tg varies strongly for the thermoplastic materials and/or compositions as for example mentioned above, please find below a plurality of exemplary embodiments for the high temperature threshold and/or low temperature threshold in relation to the glass transition temperature of specific materials or compositions.

The glass transition temperature of Acrylonitrile butadiene styrene or ABS is for example 105°C. The high temperature threshold for ABS could for example be in the range of 115°C to 130°C or optionally even higher. The corresponding low temperature threshold for ABS could for example be in the range of 100°C down to 75°C or even lower, for example optionally down to for example 5°C.

The glass transition temperature of Poly(carbonate) or PC is for example 145°C. The high temperature threshold for PC could for example be in the range of 155°C to 160°C or optionally even higher. The corresponding low temperature threshold for PC could for example be in the range of 130°C down to 105°C or even lower, for example optionally down to for example 5°C.

The glass transition temperature of Polystyrene or PS is for example 95°C. The high temperature threshold for PS could for example be in the range of 105°C to 110°C or optionally even higher. The corresponding low temperature threshold for PC could for example be in the range of 80°C down to 55°C or even lower, for example optionally down to for example 5°C.

The glass transition temperature of a composition comprising polycarbonate and acrylonitrile butadiene styrene with or without additives or a PC/ABS composition is for example 125°C. It is clear that alternative PC/ABS compositions are possible for example comprising a glass transition temperature in the range of 110°C to 140°C. The high temperature threshold for a PC/ABS composition with a Tg of 125°C could for example be in the range of 135°C to 140°C or optionally even higher. The corresponding low temperature threshold for such a PC/ABS composition could for example be in the range of 110°C down to 85°C or even lower, for example optionally down to for example 5°C.

It is clear that in this way the method allows for an efficient, simple and environmentally friendly manufacturing process as the method does not comprise one or more of the following steps:
- applying a negative pressure to the thermoplastic material during at least a part of the injection moulding cycle;
- introducing a pressurized gas into the mould cavity during at least a part of the injection moulding cycle;
- introduce one or more voids into the injection moulded product by means of a gas or foam during the injection moulding cycle.

According to a second aspect of the invention there is provided an injection moulded product manufactured according to the method according to the first aspect of the invention, wherein the injection moulded product comprises:
- at least one rib or boss with a rib-to-wall thickness ratio of up to at least 250%; and
- no corresponding sink marks visible with the naked eye.

It is clear that several embodiments and further embodiments of the injection moulded product are possible generally in line with the embodiments of the method of manufacturing such an injection moulded product and any combinations thereof mentioned above.

According to a third aspect of the invention there is provided an injection moulding apparatus comprising a mould comprising a mould cavity corresponding to the injection moulded product according to the second aspect of the invention and configured to perform the method according to the first aspect of the invention, characterised in that:
- the mould cavity corresponds to an injection moulded product comprising a wall and, extending from said wall, at least one rib or boss; the at least one rib or boss comprising a rib-to-wall thickness ratio of up to at least 250%
- the injection moulding apparatus is configured to perform the step of producing by means of a variable temperature cycle moulding process the injection moulded product without causing one or more sink marks visible with the naked eye.

### Brief Description of the Drawings

Exemplary embodiments will now be described with reference to the accompanying drawings in which:
Figure 1 shows a fragment of a section of an embodiment of an injection moulded product comprising a rib being manufactured according to the method of manufacturing and a corresponding embodiment of an injection moulding apparatus comprising a mould with a mould cavity corresponding to the injection moulded product;
Figure 2 shows a view of the embodiment of the injection moulded product as manufactured in Figure 1, along Arrow II of Figure 1;
Figure 3 shows a section, similar to that of Figure 1, of the embodiment of the ejection moulded product along line III - III of Figure 2;
Figures 4 to 6 show similar views as Figures 1 - 3 for an alternative embodiment of an injection moulded product comprising a boss, whereby Figure 5 shows a view along arrow V in Figure 4 and Figure 6 shows a section along line VI - VI in Figure 5;
Figure 7 shows an embodiment of the steps of an embodiment of a method of manufacturing an injection moulded product by means of an injection moulding apparatus similar to that shown in Figures 1 to 6;
Figure 8 shows an embodiment of a scheme for the different operational phases and corresponding temperatures during an embodiment of the method of manufacturing similar to that as shown in Figure 7; and
Figure 9 schematically shows an embodiment of a sink mark for a rib on a wall of an injection moulded product.

### Detailed Description of Embodiment(s)

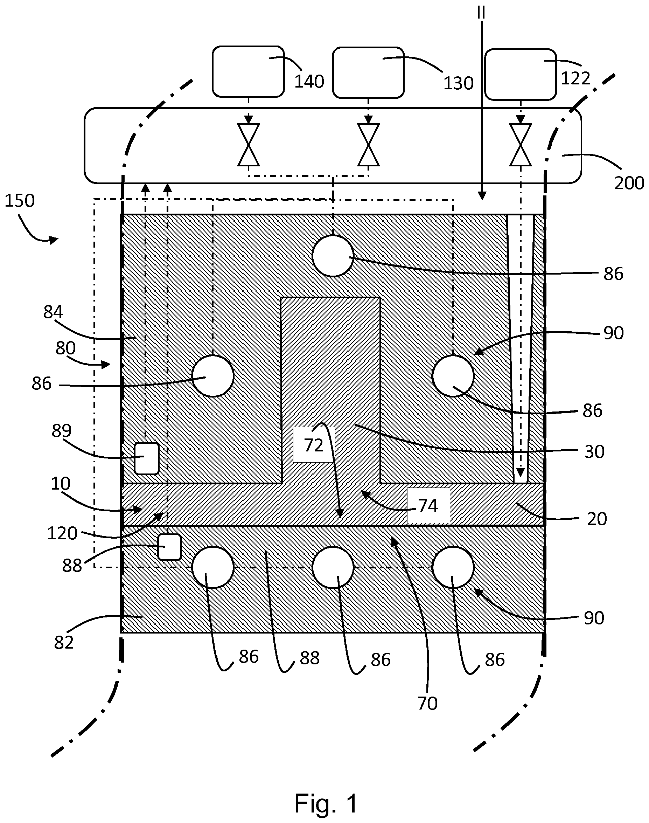

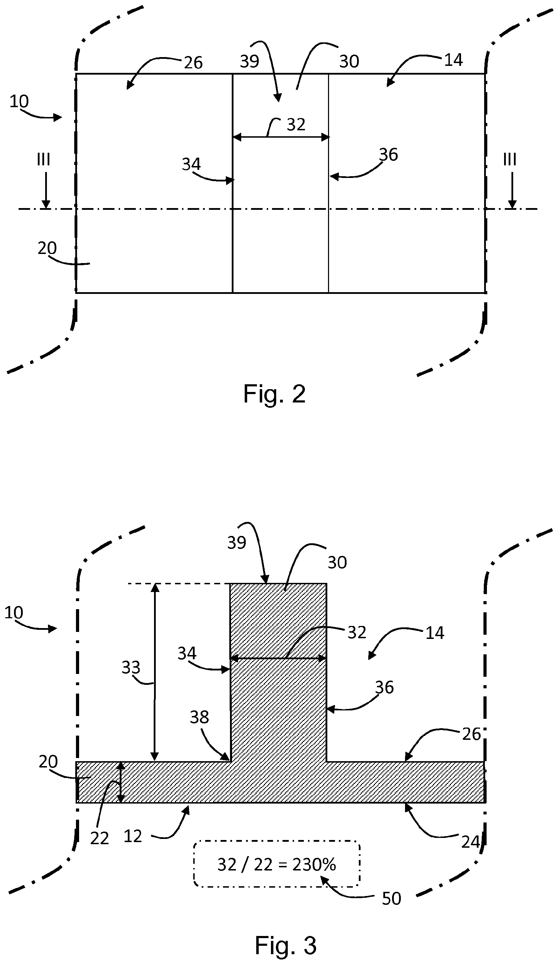

Figure 1 schematically shows a fragment of a section of an embodiment of an injection moulding apparatus 150 configured to perform an embodiment of the method of manufacturing according to the invention. As shown, the embodiment of the injection moulded product 10 being manufactured comprises a wall 20. As further shown according to this embodiment there extends a rib 30 from this wall 20. It is clear that, although only one rib 30 extending from the wall 20 is shown, that alternative embodiments for the injection moulded product 10 are possible comprising any suitable plurality of ribs 30 extending from the wall, as long as in general at least one rib 30 extends from the wall 20 of the injection moulded product. Although, as shown, the rib 30 comprises a substantially rectangular cross section, and as shown more clearly in Figure 2, extends in a straight linear fashion along the wall 20, it is clear that alternative embodiments are possible with respect to the cross section, such as for example a trapezoid shape, a shape comprising rounded corners, draftangle, etc. or with respect to the direction along which the rib 30 extends along the wall 20, as long as in general the rib 30 extends from the wall 20 in such a way that it allows for removal of the finished injection moulded product 10 from the mould 80 of the injection moulding apparatus 150 as will be explained in further detail below.

As will be explained in further detail below, the embodiment of the injection moulding apparatus 150 of Figure 1 allows for producing such an embodiment of the injection moulded product 10 comprising a wall 20 and a rib 30 extending from this wall 20 by means of a variable temperature cycle moulding process 100. As shown the embodiment of the injection moulded product 10 comprising a rib 30 is thus manufactured by means of an injection moulding apparatus 150 comprising a mould 80 comprising a mould cavity 70 corresponding to the injection moulded product 10. This means that during the method for producing the injection moulded product 10, molten resin is inserted into the mould cavity 70 of the mould 80 which defines the shape of the injection moulded product 10. It is thus clear that the shape of the mould cavity of the mould 80 and the shape of the injection moulded product are thus complementary. When, as shown, the injection moulded product 10 comprises a rib 30 extending from the wall 20, this means that the mould cavity 70 of the mould 80 will comprise at the location of the rib 30 a corresponding recess with respect to the part of the mould cavity 70 which defines the shape of the wall 20. It is thus clear that, when in the context of this description there is referred to dimensional features, such as size, thickness, height, etc. or ratios thereof of the injection moulded product 10, this involves likewise a reference to the dimensional features of the complementary elements of the corresponding mould cavity 70 of the mould 80.

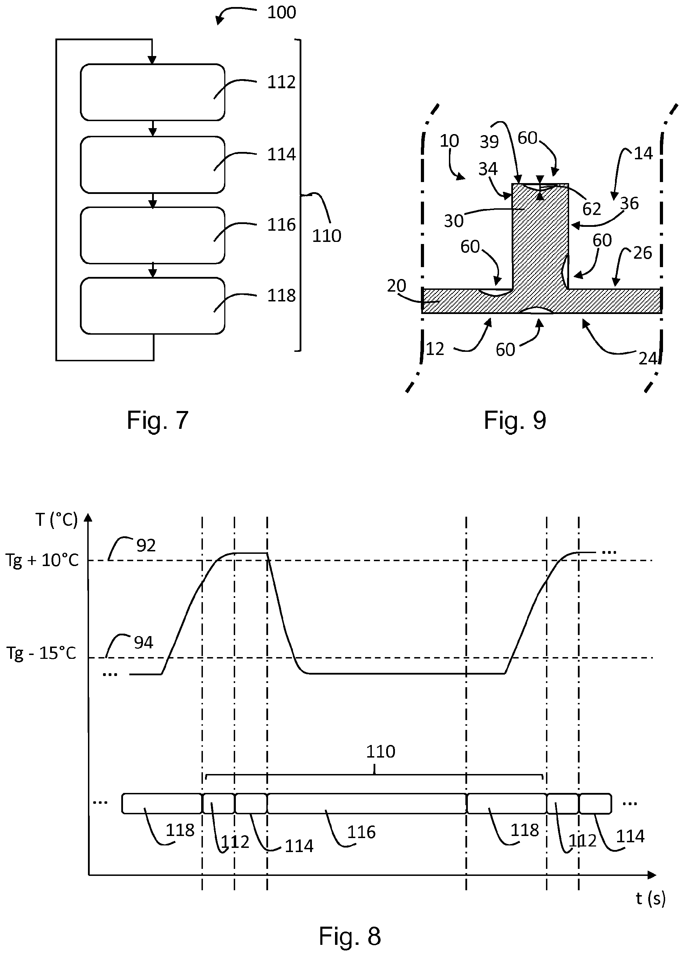

According to the embodiment shown in Figure 1, and more clearly shown in Figures 2 and 3, the injection moulded product 10 comprises a rib-to-wall thickness 50 of 230%. As will be explained in further detail below with respect to Figures 7 and 8, when the method for producing the injection moulded product 10 comprises the step of producing the injection moulded product 10 by means of a variable temperature cycle moulding process 100, this will result in the surprising effect of enabling the production of such in injection moulded product 10 without causing sink marks 60 visible to the naked eye. It is clear that although the rib-to-wall thickness ratio 50 of the embodiment shown is 230%, there are possible alternative embodiments of the injection moulded product 10, which can be produced in this way without causing sink marks 60 visible to the naked eye. Experiments have confirmed that it was in general possible to produce injection moulded products 10 comprising at least one rib 30 extending from a wall 20 with a rib-to-wall thickness ratio of up to at least 250% without causing sink marks 60 visible to the naked eye. More specifically, the surprising effect of the reduced development of sink marks 60 is already apparent in the specific range of a rib-to-wall thickness ratio 50 of 70% to 250% or higher, but is clearly most surprising in the range of 150% to 250% or higher.

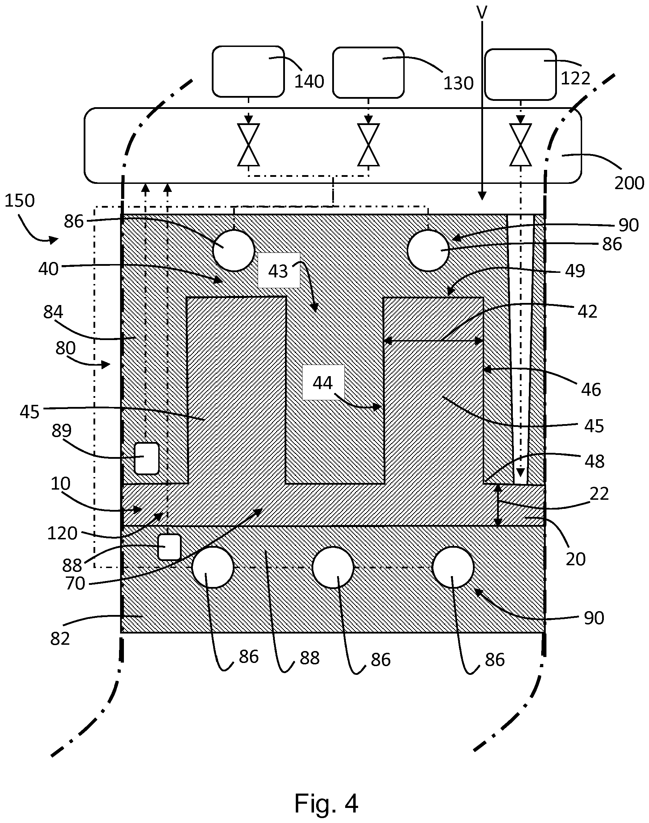

It is clear that, as schematically shown in more detail in Figure 9, the depth 62 of a sink mark 60 for a rib 30 extending from a wall 20 of an injection moulded product 10 does not exceed 0,02 mm, then generally this sink mark is not detectable by means of the naked eye. It is clear that, as will be explained in more detail with reference to Figures 4 to 6, the same holds for any sink mark 60 for a boss 40 extending from a wall 20 of an injection moulded product 10.

As further clarified by means of the views of Figure 2, which schematically shows a view of the embodiment of the injection moulded product 10 as manufactured in Figure 1, along Arrow II of Figure 1, and the section of Figure 3 along line III - III of Figure 2, the rib-to-wall thickness ratio 50 is defined by the ratio of the wall thickness 32 of the rib 30 versus the wall thickness 22 of the wall 20 at a neighbouring location where the rib 30 is no longer present. The wall thickness 22 of the wall 20 of the injection moulded product 10 is generally also referred to as the nominal wall thickness of the injection moulded product 10.

This thus means that, as most clearly shown in Figure 3, the wall thickness 22 of the wall 20 at the location of a rib 30 is determined by the transverse distance between an exterior side 24 and an interior side 26 of the wall 20 at the base 38 of the rib 30. As shown the exterior side 24 of the wall 20 comprises a plane surface, which for example forms the front, external or visible side of a cover for a devices such as for example a television, car panel, etc. The interior side 26 of the wall 20, which as shown is situated at the opposing side of the wall 20, is the side of the wall 20 from which the rib 30 extends. This interior side of the wall 20 typically is hidden from view when the injection moulded product is assembled into its device, such as a television set, car panel, etc. and thereby forms the internal, invisible side of a cover for such devices. As this side is hidden from view in the finally assembled device comprising the injection moulded product, elements extending from the wall 20 for increasing structural rigidity or to accommodate mounting elements, etc. are preferably only provided on and extending from the interior side 26 of the wall 20. Although the wall 20 shown comprises a straight, plane exterior side 24 and a parallel interior side 26 from which the rib 30 extends in a transverse fashion, it is clear that alternative embodiments are possible, for example in which the exterior side 24 has an at least partly curved, angled, etc. shape, in which the interior side 26 of the wall 20 is not entirely parallel to the exterior side 24 of the wall 20, in which the rib 30 extends under an angle which diverges from the transverse orientation shown from the wall 20, etc. It is however clear that, for all such alternative embodiments, a man skilled in the art will be able to determine the wall thickness 22 of the wall 20 for an injection moulded product 10 comprising a rib 30 extending thereof, for example by defining the wall thickness 22 of the wall 20 as the distance between the exterior side 24 and the interior side 26 of the wall 20 at the base 38 of the rib 30. It is clear that the base 38 of the rib 30 is defined by the intersection of the rib 30 with the wall 20 at the interior side 26 of the wall 20, such as for example shown in Figure 3. The base 38 of the rib 30, is thus determined by the location where the rib 30 starts to extend from the interior side 26 of the wall 20. The rib 30, as shown, thus extends from the wall 20 from this base 38 to an opposing top 39 at the distal end of the rib 30. It is clear that the distance 33 between the base 38 and the top 39 of the rib 30 is generally referred to as the height of the rib 30.

As further, most clearly shown in Figure 3, it is clear that the wall thickness 32 of the rib 30 is determined as the transverse distance between both opposing sides 34, 36 of the rib 30 which extend from the wall 20. Although according to the embodiment shown in Figures 1 to 3, these opposing sides 34, 36 extend from the interior side 26 of the wall 20 in a transverse way, and both opposing sides 34, 36 are arranged parallel to each other, it is clear that alternative embodiments are possible, in which for example these opposing sides 34, 36 extend under an angle diverging from a transverse orientation with respect to the interior side 26 of the wall 20, in which both opposing sides 34, 36 at least partially diverge from a parallel arrangement, etc. it is clear that a man skilled in the art will be able to determine the wall thickness 32 of such a rib 30 as the as the transverse distance between both opposing sides 34, 36 of the rib 30 which extend from the wall 20.

According to an exemplary embodiment, similar to that shown in Figures 1 to 3, the wall thickness 22 of the wall 20 is for example 3mm and the wall thickness of the rib 30 is 6.9mm. As shown this results in a rib-to-wall thickness ratio 50 of 6.9mm / 3mm = 230 % for this embodiment of the injection moulded product 10. It is clear that alternative embodiments are possible, such as for example a wall thickness 22 of the wall 20 of 2mm and a wall thickness 32 of the rib 30 of 4mm resulting in a rib-to wall thickness ratio 50 of 4mm / 2mm = 200%. It is clear that still further alternative embodiments are possible, however It is clear that alternative examples 12. A method according to any of the preceding claims, wherein the injection moulded product 10 comprises one or more of the dimension a wall thickness 22 of the wall 20 in the range of 0,6 mm to 15 mm, for example in the range of 1,5 mm to 5 mm, preferably in the range of 2 to 3 mm is most advantageous for use in injection moulded products 10 such as for example a television set cover, car cover, etc. of which the overall dimensions generally exceed a 5 cm x 10cm span, for example the width and breadth of the such covers exceeds a span of 10 cm x 20cm, and can for example reach a span of even 50cm or more.

Although according to the embodiment shown, the wall thickness 22 of the wall 20 is preferably substantially uniform, it is clear that alternative embodiments are possible in which a limited variation is possible with respect to the average wall thickness of the wall 20. In general embodiments are possible in which the variation of the wall thickness 22 of the wall 20 with respect to the average wall thickness of the wall do not exceed 50%, however preferably these variations in the wall thickness 22 of the wall 20 are less than 5%. It is further also clear that, although alternative embodiments are possible, preferably the at least one rib 30 or boss 40 of the injection moulded product only extends from the wall 20 at the interior side 26 of the wall 20, and the exterior side 24 of the wall 20 preferably comprises a smooth, continuous surface without extensions which extend more than 5% from the surrounding surface.

According to the embodiment shown, the height of the rib 30, this means the distance 33 over which the rib extends from the wall 20 is for example 15mm, or 500% of the wall thickness 22 of the wall 20 of 3mm. It is however clear that alternative embodiments of the rib 30 are possible, however it is preferred that the height of the rib 30 is sufficiently large with respect to the wall thickness 22 of the wall 20 as this ensures a good structural rigidity for a given wall thickness 22 of the wall 20 and thus a given weight of the injection moulded product 10, which is largely determined by the amount of material used for the wall 20. In this way it is preferred that the rib 30 extends from the wall 20 over height 33 of 300% of the wall thickness 22 of the wall 20, however in general a height 33 of 200% or more of the wall thickness 22 of the wall 20 is also possible.

As most clearly shown in Figure 3, the injection moulded product 10 in this way comprises an exterior side 12 which corresponds to the exterior side 24 of the wall 20. As further shown, according to this embodiment the injection moulded product 10 comprises an opposing interior side 14, which is formed by the interior side of the wall 20 and the rib 30 which extends thereof, this means both opposing sides 34, 36 and the top 39 of this rib 30. It is clear that alternative embodiments are possible in which two or more ribs 30, and/or at least one boss 40, as will be described in more detail below are extending from the interior side 26 of the wall 20 and which together therewith form the interior side 14 of the injection moulded product 10. It is clear that, as mentioned above, by applying the variable temperature moulding process, which will be described in more detail below, an injection moulded product 10 can be achieved wherein no sink marks 60 visible to the naked eye are caused at both the exterior side 12 and the interior side 14 of the injection moulded product 10.

As shown in Figure 1, according to this embodiment of the moulding apparatus 150, the mould 80 comprises two mould parts 82 and 84. The mould 80 thus comprises a first mould part 82 comprising a first mould cavity part 72 of the mould cavity 70 for the exterior side 12 of the injection moulded product 10 and a second mould part 84 comprising a second mould cavity part 74 of the mould cavity 70 for the interior side 14 of the injection moulded product. It is thus clear that the shape of the mould cavity 70 corresponds to the shape of the injection moulded product 10 as described above and that for example for the rib 30 extending from the interior side 26 of the wall 20, a corresponding undercut is provided in the second mould part 84 corresponding to this rib 30 and forming part of the second mould cavity part 74 which defines the interior side 14 of the injection moulded product 10. Such a two part construction of the mould 80 of the injection moulding apparatus 150 allows the mould parts 82, 84 to be separated during the injection moulding cycle in order to enable easy removal of the injection moulded product 10 from the mould cavity 70 once formed. It is clear however, that alternative embodiments are possible in which a different number of mould parts is used to form the mould 80, and or the mould 80 is formed in a single piece.

According to the embodiment shown heating and cooling elements 90 are formed by means of channels 86 arranged in the mould 80. According to a particular embodiment of variable temperature injection moulding process also known as RHCM, through these channels 86 respectively water in its liquid state can flow to act as cooling medium or steam can flow to act as heating medium. It is however clear that alternative embodiments are possible comprising a different cooling medium or heating medium which respectively act as cooling or heating element when flowing through the channels 86, such as for example oil or any other suitable cooling or heating medium. Water and steam however are preferable as they are able to achieve a quick and efficient cooling and heating effect, are compatible in such a way that they can flow through the same channels 86 and their temperature, flow and pressure can be controlled by means of readily available control elements. According to the embodiment shown, preferable these channels 86 are arranged in both the first and second mould part 82, 84 and relatively close to the mould cavity 70 as in this way the temperature of the surface of the mould cavity 70 can be most efficiently controlled during the injection moulding cycle. However, it is clear that alternative embodiments are possible, such as for example embodiments in which these channels 86 are only provided in the first mould part 82 or in the second mould part 84. As already mentioned above, these channels 86 are preferable arranged as close to the mould cavity 70 as possible, which for example means that preferably the channels 86 are arranged at a distance of for example 5 mm of the mould cavity 70, however in general, channels 86 arranged within a maximum distance of 15 mm are possible. Although it is preferred to reduce the distance between the channels 86 and the mould cavity 70 as much as possible in order to increase the efficiency of the heat transfer between the mould cavity 70 and the heating and/or cooling medium in the channels 86, the distance between these channels 86 and the mould cavity should also remain sufficiently high to enable the wall thickness of the mould in between the respective channels 86 and the mould cavity 70 to be sufficiently high to withstand the pressure of the heating and/or cooling medium in the channels 86 during the injection moulding cycle 110 without undesired deformation of the mould cavity 70. As shown there is provided a controller 200 which is configured to control the temperature, flow and/or pressure of water and steam respectively supplied from a cooling supply 130 and a heating supply 140 to the channels 86 during the injection moulding cycle 110.

As shown in Figure 1, during the injection moulding cycle, molten thermoplastic material 120, also referred to as thermoplastic resin is injected into the mould cavity 70 of the mould 80 from a resin supply 122 under control of a controller 200. This controller 200 is for example configured to control the temperature, pressure and/or flow of the thermoplastic material 120 to the mould cavity 70 of the mould 80 during the injection moulding cycle. Preferably the thermoplastic material 120 a material known under the tradename EMERGE PC/ABS 7700 Advanced Resin as manufactured by Trinseo. However alternative embodiments are also possible such as example thermoplastic resins known under the tradenames EMERGE PC/ABS 7570 Advanced Resin as manufactured by Trinseo or EMERGE PC 8702-15 Advanced Resin as manufactured by Trinseo. Still further alternative embodiments are possible comprising one or more of the following: Polycarbonate or PC; Acrylonitrile butadiene styrene or ABS; a composition comprising polycarbonate and Acrylonitrile butadiene styrene or a PC/ABS composition; a composition comprising polycarbonate and polyethylene terephthalate with or without additives or a PC/PET composition; a composition comprising polybutylene terephthalate and polyethylene terephthalate with or without additives; Polyamide or PA; Polystyrene or PS; Polypropylene or PP; Polyoxymethylene or POM; Poly(methyl methacrylate) or PMMA; Acrylonitrile Styrene Acrylate or ASA; Poly(p-phenylene oxide) or poly(p-phenylene ether) or PPE; etc. It is further clear that according to still further embodiments of the resin mentioned above, the resin could further comprise one or more additives such as for example chalk, glass fibres, etc in addition to the thermoplastic material or composition.

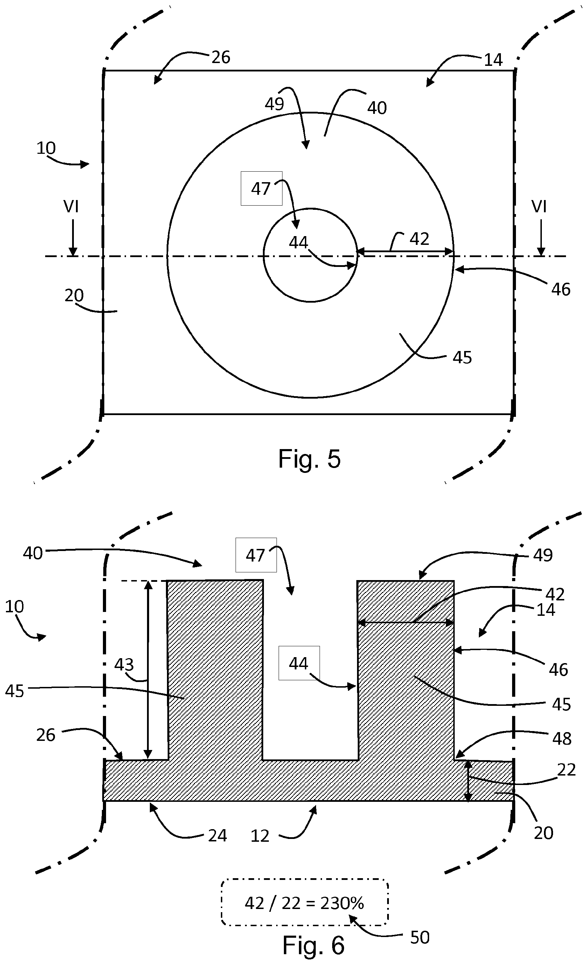

Figures 4 to 6 show similar views as Figures 1 - 3 for an alternative embodiment of an injection moulded product 10 comprising a boss 40 extending from the wall 20. Figure 5 shows a view along arrow V in Figure 4 and Figure 6 shows a section along line VI - VI in Figure 5. It is clear that the embodiment of Figures 4 to 6 is generally similar as described above with reference to Figures 1 to 3, and for the sake of brevity similar elements will be referenced with similar reference numbers and generally are manufactured and dimensioned in a similar way as described above. As shown, the main difference with the embodiment of Figures 1 to 3, lies in the fact that instead of a rib 30, there is now a boss 40 extending from the wall 20 of the injection moulded product 10. As most clearly shown the boss 40 has a hollow cylindrical shape of which the central axis extends transverse from the wall 20. However it is clear that alternative embodiments are possible in which such a boss is a feature extending from the wall 20, which is commonly used to interact with mounting or fixing means such as for example screws, bolts, clips, etc. It is clear that, according to the embodiment shown, such mounting means interact, connect or cooperate with the central hole or pocket 47 of the hollow cylindrical shape of the boss 40. It is clear that the wall thickness 42 of the boss 40, corresponds to the wall thickness 42 of the annular wall 45 of the boss 40. As shown, this thus means the distance 42 between the internal face 44 and the external face 46 of this annular wall 45. It is further also clear that the height 43 of the boss 40 is the distance between the base 48 at the location of the of the boss 40 at the interior side 26 of the wall 20 and the opposing top or distal end 49 of the boss 40. It is clear, that similar as described above with respect to the rib 30, the method of manufacturing also allows to produce an injection moulded product 10 comprising a boss 40 with a rib-to-wall thickness ratio 50 of up to at least 250% without causing one or more sink marks 60 visible with the naked eye. According to the embodiment shown, the injection moulded product 10 for example comprises a wall thickness 22 of the wall 20 of 3mm and a wall thickness 42 of the boss 40 of 6,9mm, and thus a rib-to-wall thickness ratio of 6,9mm / 3mm = 230%. It is however clear that numerous alternative embodiments are possible, in line with the alternative embodiments described above with reference to Figures 1 to 3 for the rib 30.

It is further also clear that, although the embodiments of Figure 1 to 6 show a single rib 30, or a single boss 40 extending from the wall 20, in a particular orientation and comprising a particular shape, there are possible alternative embodiments, comprising any suitable number of ribs 30 or bosses 40 or any suitable combination thereof, arranged in any suitable orientation and comprising any suitable shape.

Figure 7 shows an embodiment of the steps of an embodiment of a method of manufacturing an injection moulded product 10 by means of an injection moulding apparatus 150 similar to that shown in Figures 1 to 6. As shown, according to this embodiment the variable temperature cycle moulding process 100 comprises an injection moulding cycle 110 which is performed in a cyclical fashion for each injection moulded product being produced. According to this embodiment the injection moulding cycle 110 comprising a plurality of consecutive phase: a pre-injection phase 112, an injection phase 114, a cooling phase 116 and an ejection phase118. The pre-injection phase 112 is a phase which takes place before molten thermoplastic resin 120 is injected in the mould cavity 70 of the mould 80 for forming the moulded product 10. During this pre-injection phase 112 the heating elements 90 heat the mould 80 to a temperature of at least a high temperature threshold 92. As mentioned above, according to an embodiment referred to as RHCM, this can for example be accomplished by providing heated steam to the channels 86 in the mould 80, while the controller 200 monitors the temperature of the mould 80. According to the embodiment shown in Figure 1 or 3, this could for example be realised by means of a first temperature sensor 88 in the first mould part 82 configured to monitor the temperature of this first mould part and a second temperature sensor 89 in the second mould part 84 configured to measure the temperature in this second mould part 84. It is clear that alternative embodiments are possible, in which for example only a single temperature sensor is arranged in or attached to the mould, or in which three, four or more temperatures sensors are provided for monitoring the temperature at different locations in the mould 80. As further shown in Figure 7, when the controller 200 detects that the temperature of the mould 80 has reached the high temperature threshold 92 and/or when a predetermined duration for the pre-injection phase 112 has passed, the next step of the injection moulding cycle 110 is initiated, namely the injection phase 114 during which molten thermoplastic material 120 is injected in the mould cavity 70 of the mould 80. As for example shown in the embodiments of Figure 1 and 3, the molten thermoplastic material is provided from a suitable resin supply 122 under control of a controller 200. This controller 200 is configured to control the temperature, pressure and/or flow of the thermoplastic material 120 to the mould cavity 70 of the mould 80 during the injection moulding cycle 110. During at least a part of this injection phase 114 the heating elements 90 keep the mould 80 at a temperature above the high temperature threshold 92. According to the embodiment of Figure 1 and 3, this for example means that during at least a part of the injection phase 114, the channels 86 are provided with heated steam under control of the controller 200 such that the temperature of the mould 80 remains higher than the high temperature threshold 92, such as for example measured by means of the temperature sensors 88, 89 arranged in the mould 80 in the vicinity of the mould cavity 70. As further shown in Figure 7, subsequently, for example when a predetermined duration for the injection phase 114 has passed, the controller 200 will initiate the next phase of the injection moulding cycle 110, namely a cooling phase 116. During this cooling phase 116 the thermoplastic material 120, which was injected in the mould cavity 70 of the mould 80 during the injection phase 114 as described above, is allowed to at least partially set. During this cooling phase 116 of the injection moulding cycle 110, the controller 200 will also control the cooling elements 90 in such a way that they cool the mould 80. As will be shown in further detail below, according to the embodiment shown in Figures 7 and 8 the controller 200 will for example cool the mould 200 in this way until it is cooled to a temperature of at least a low temperature threshold 94. It is clear that the temperature of the mould 80 can be monitored by the controller 200 by means of the temperature sensors 88, 89 arranged in the mould 80. According to the embodiment of Figure 1 or 3, this could be realized by the controller 200 initiating a suitable flow of water in its liquid state from the cooling supply 130 to the channels 86 in the mould 80. Preferably the controller 200 is thus configured to control the temperature, flow and/or pressure of the water to the channels 86 such that the temperature of the mould 80 is cooled from a temperature above the high temperature threshold 92 to a temperature below the low temperature threshold 94 in a desired way. When controller 200 detects that the temperature of the mould 80 has fallen below the low temperature threshold, and/or when a predetermined duration for the cooling phase 116 has passed, the controller will initiate the next phase of the injection moulding cycle 110, namely the ejection phase 118. During this ejection phase 118, the at least partially set thermoplastic material 120 is ejected from the mould cavity 70 of the mould 80. According to the embodiment shown in Figure 1 or 3, this could for example be realized by increasing the distance between both mould parts 82, 84 in such a way that the at least partially set thermoplastic material 120 can be more easily ejected and removed from the mould cavity 70, after which the distance between both mould parts 82, 84, can then be decreased again, such that the mould parts 82, 84 again form the desired shape for the mould cavity 70 at the initiation of the injection phase 114. The above described opening and closing of the mould 80 by respectively increasing and decreasing the distance between the opposing mould parts 82, 84, could for example be executed under control of the controller 200, for example in a timed fashion, for example in order to accomplish opening and closing of the mould 80 within a predetermined duration for the ejection phase 118. However it is clear that alternative embodiments are possible, as long as in general during the ejection phase 118 the at least partly set thermoplastic material is ejected from the mould cavity 70 of the mould 80. For example, according to the embodiment of Figures 1 or 3, the opening and closing of the mould 80 could both be performed during an ejection phase 118 as described above, however according to an alternative embodiment the closing of the mould 80 could also be performed at least partly, or entirely during the pre-injection phase 112 of the next injection moulding cycle 110. It is clear that embodiments of the moulding apparatus 150 as described above, comprising internal heating elements 90, which are arranged in the mould 80 in the vicinity of the mould cavity 70, such as the channels 86 for a suitable cooling and/or heating medium, electrical heaters, etc. are preferred as this allows for the flexibility of closing the mould 80 again after it has been opened during the ejection phase at any suitable point in the injection moulding cycle 110 as the heating or cooling by means of the heating or cooling elements 90 can be performed irrespective of the opened or closed state of the mould 80. It is clear that this is different for alternative embodiments in which use is made of external heating elements for example comprise a flame heater, an infrared or IR heater, an induction heater, etc. For such embodiments, the mould 80 which is opened during the ejection phase 118 for ejecting the at least partly set thermoplastic material 120, typically remains opened during at least a part of the pre-injection phase 112 in order to facilitate introduction of the external heating elements into the mould cavity 70 in the vicinity of the walls of the mould cavity parts of the mould parts for increasing the temperature of these parts of the mould at least the predetermined high temperature threshold. According to such embodiments, when the desired temperature is reached the mould is then closed, for example after extraction of the external heating elements, and before initiation of the subsequent injection phase 114. It is clear that still further alternative embodiments are possible, however preferable, as described above, the heating and cooling elements 90 are arranged in the mould 80 in the vicinity of the mould cavity 70 configured to controllably heat and cool the mould 80 during the injection moulding cycle 110, as this allows the heating elements 90 to continue to perform their heating function also during at least a part of the injection phase 114, which allows the mould 80 to stay at a sufficiently high temperature for a sufficiently long duration during at least a part of the injection phase 114, such that a uniform cooling of the injected thermoplastic material 120 along the entire surface of the mould cavity 70 can be assured, even when this cavity 70 spans a relatively large distance.

Figure 8 shows a specific embodiment of a timing scheme for the different operational phases 112, 114, 116, 118 and for example corresponding temperatures during an injection moulding cycle 110 similar as explained above with reference to Figure 7. According to the embodiment of the method of manufacturing schematically shown in Figure 8, the injection moulding cycle 110 comprises a pre-injection phase 112 during which the mould 80 is heated until it reaches a high temperature threshold 92 which is above the glass transition temperature or Tg. It is clear that this glass transition temperature varies strongly from material to material. As already mentioned above the glass transition temperature for a resin comprising PC could for example be 145°C, the glass transition temperature for a resin comprising ABS could for example be 105°C, the glass transition temperature for a resin comprising a particular PC/ABS composition could for example be 125°C. It is clear that alternative embodiments are possible, as long as the high temperature threshold 92 is 5 °C above glass transition temperature or higher, however preferably the high temperature threshold 92 is the glass transition temperature increased by a value in the range of 10°C to 15°C. For the above mentioned examples this for example means for PC in the range of 150°C and higher, preferably in the range of 155°C to 165°C. For the above mentioned ABS resin this means for example a high temperature threshold in the range of 110°C or higher, preferably in the range of 115°C to 120°C. For the abovementioned PC/ABS composition the high temperature threshold is for example in the range of 130°C or higher, preferably in the range of 135°C to 140°C. However, it is clear that for alternative resins, alternative temperature ranges are available for the high temperature threshold in relation to their respective glass transition temperature. In general, dependent on the glass transition temperature, the high temperature threshold could be in the temperature range of 100°C to 165°C. As explained above, the controller 200 could for example monitor the temperature of the mould 80 by means of one or more suitable temperature sensors 88, 89 and initiate the injection phase 114 when the high temperature threshold 92 is achieved. However it is clear that according to alternative embodiments that instead of or in addition to initiation of the injection phase 114 based on the temperature of the mould, the injection phase 114 could be initiated when a predetermined duration of the pre-injection phase 112 has passed, for example 4s. It is clear that alternative embodiments are possible, of which the predetermined duration can vary, and for example will be dependent on the fact whether or not the closing of the mould is performed during the ejection phase, or at least partly during the pre-injection phase. However, it is clear that preferably the duration of the pre-injection phase 112 is sufficiently long, such that the heating elements are able to increase the temperature of the mould 80 to at least the high temperature threshold 92 after the mould 80 was cooled to the low temperature threshold 94 during a preceding injection moulding cycle 110. Additionally it should also allow for sufficient time to open and/or close the mould, where necessary, for example in function of introduction of heating elements into the mould cavity 70 of the mould 80. However, it is also clear that is desired, in order to increase the level of efficiency, to limit the duration of the injection moulding cycle 110 as much as possible. In general a duration of the pre-injection phase 112 in the range of 3s to 35s are possible, and allow to achieve an acceptable overall duration of the injection moulding cycle 110, which is for example in the range of 30s to 80s, for example 55s. It is clear that the overall duration of the injection moulding cycle 110 is dependent on for example the size, complexity, etc. of the injection moulded product. It is thus clear that for small or simple injection moulded products the overall duration of the injection moulding cycle could be reduced even further, for example down to 5 s. According to the embodiment shown the duration of the injection phase 114 is 4s. It is clear that during this injection phase 114, the temperature of the mould 80 is kept above the high temperature threshold 92. This could for example be realized as described above by controlling the heating elements 90 in such a way that the temperature measured by the temperature sensors 88, 89 does not fall below the high temperature threshold 92. However it is clear that alternative embodiments are possible, in which the temperature of the mould 80 is only kept above the high temperature threshold 92 for a part of the injection phase 114, instead of the entire injection phase 114. It should however be clear that, during the injection phase 114, the temperature should be kept above the high temperature threshold 92 for a sufficiently long duration to allow the mould cavity to be entirely filled with with molten thermoplastic resin, such that a more uniform cooling of the thermoplastic resin in the mould cavity 70 of the mould 80 can be achieved. This means that in general, with a the duration of the injection phase 114 in the range of 2,5s to 5s, the duration of the injection phase 114, during which the high temperature threshold 92 must be exceeded is at least 50%, and preferably 80% or more of the overall duration of the injection phase 114. It is further clear that the injection phase 114 could comprise a filling phase during which the mould cavity 70 is initially filled with thermoplastic material 120 and a subsequent packing phase during which a packing pressure is applied to the thermoplastic material to complete the mould filling and/or to compensate for thermal shrinkage of the thermoplastic material during the injection phase. It is further clear that during the injection phase 114, the controller 200 controls the temperature, pressure and flow of the molten thermoplastic material 120 in accordance with desired values during the injection phase 114. Typically the temperature of the molten thermoplastic resin 120 during injection is chosen high enough to achieve a sufficiently low level of viscosity, for example higher than 180°C, for example in the range of 200°C to 350°C, and a packing pressure of several hundreds of bars are desired, such as for example in the range of 250 bar to 800 bar. According to the embodiment shown in Figure 8, during the subsequent cooling phase 116 is initiated after the injection phase 114 and lasts for a predetermined duration of 25s during which the cooling elements, such as for example cooling water which is provided to the channels in the mould, reduces the temperature of the mould 80 until it falls below the low temperature threshold 94, which according to this embodiment is glass transition temperature minus minimum 15°C. It is clear that alternative embodiments are possible, as long as in general the duration of the cooling phase 116 is in the range of 10s to 35s. It is clear that according to still further alternative embodiments instead of or in addition to a predetermined duration for the cooling phase 116, the cooling phase 116 could be ended as soon as the temperature of the mould 80 falls below this predetermined low temperature threshold 94. It is also clear that, still further alternative embodiments are possible with respect to the low temperature threshold Preferably, the low temperature threshold 94 is chosen low enough such that the thermoplastic material is sufficiently set during the cooling phase, such that it can be ejected during the subsequent ejection phase 118 without the risk for deformation or damage to the shape of the injection moulded product 10. However preferably the low temperature threshold is also chosen to be as high as possible in order to shorten the cooling operation during the cooling phase, and thus to shorten the overall duration of the injection moulding cycle 110, and additionally in order to optimize the energy consumption of the injection moulding cycle 110 as a smaller temperature difference between the high temperature threshold 92 and the low temperature threshold 94 causes a reduction in the energy consumption of the heating and cooling elements. Preferably the low temperature threshold 94 is 80°C to 125°C, however it is clear that alternative embodiments are possible in which for example the low temperature threshold is in the range of 5°C to 125°C. It should however be clear that in any case the high temperature threshold 92 is higher than the low temperature threshold 94 for a particular embodiment of an injection moulding cycle 110 of the variable temperature injection moulding process 100. Preferably the difference between the high temperature threshold 92 and the low temperature threshold will be at least 25°C, however alternative embodiments with a difference between both thresholds of 15°C or more are also possible. Additionally, according to preferred embodiments the high temperature threshold 92 and the low temperature threshold 92 will be determined in function of the glass transition temperature of the thermoplastic material 120 used during the injection moulding cycle 110 of the variable temperature injection moulding process 100 in order to guarantee a sufficiently low level of viscosity during the injection phase 114 and a sufficiently high level of rigidity after the cooling phase 116. Preferably, the high temperature threshold 92 is the glass transition temperature of the thermoplastic material 120 increased by at least 5°C, preferably in the range of 10°C to 15°C. For example for the embodiment mentioned above, with a thermoplastic material 120 which for example comprises a glass transition temperature of 150°C, the high temperature threshold 92 of 162°C is determined as the glass transition temperature of the thermoplastic material 120 increased by 12°C. Preferably, the low temperature threshold 94 is the glass transition temperature of the thermoplastic material 120 decreased by at least 10°C, preferably decreased by a value in the range of 15°C to 40°C or more. When the glass transition temperature is for example higher than 155°C, the low temperature threshold 94 could for example be a reduction of this glass transition temperature by for example 150 °C. For the embodiment mentioned above, with a thermoplastic material 120 comprising ABS with a glass transition temperature of 105°C, the low temperature threshold 94 of 80 °C is thus determined as the glass transition temperature decreased 25°C. As shown in Figure 8, the embodiment of the injection moulding cycle 110, further comprises an ejection phase 118, which is initiated after the cooling phase 116 and comprises a duration of 10s during which for example the mould 80 is opened and the at least partly solidified thermoplastic material 120 is ejected or removed otherwise from the moulding cavity of the mould. It is clear, as mentioned above that alternative embodiments are possibly in which for example the duration of the ejection phase 118 is in the range of 1s to 20s. It is further also clear that alternative temperature ranges are possible for alternative resins in function of their respective glass transition temperature, similar as described above, in which the low temperature threshold corresponds to the glass transition temperature of the thermoplastic material decreased by at least 10°C, preferably decreased by a value in the range of 15°C to 40°C or more. It is clear that according to some embodiments the low temperature threshold could be lowered to for example as low as 5°C, and in general the low temperature threshold could thus be in the temperature range of 5°C to 130°C.

It is clear that in the above mentioned embodiments of the method of manufacturing an injection moulded product allows for an efficient, simple and environmentally friendly manufacturing process, which contrary to the beliefs of the man skilled in the art is able to achieve a rib to thickness ratio of up to 250% without causing sink marks visible to the naked eye. It is clear that the method described above does not comprise the step of applying a negative pressure to the thermoplastic material during at least a part of the injection moulding cycle, which complicates the pressure control system associated with the injection moulding apparatus. As mentioned above, there is no need for such a separated temperature control of both mould parts, and according to a particularly advantageous embodiment the channels of both mould parts 82, 84 of the mould 80 can be respectively supplied with cooling medium or heating medium from respectively a single cooling supply 130 or heating supply 140, thereby clearly simplifying and optimizing the temperature control system and associated components of the injection moulding apparatus 150. Still further it is clear that no pressurized gas is introduced into the mould cavity during at least a part of the injection moulding cycle, nor are any cavities introduced into the injection moulded product 10 by means of a gas or foam during the injection moulding cycle. In this way a more environmentally friendly and efficient manufacturing process is obtained as no gas or foaming agent is consumed. Additionally in this way an injection moulded product 10 with a better structural rigidity is obtained as the injection moulded product 10 only comprises solid thermoplastic resin 120, without any internal voids. Additionally the contours of the injection moulded product 10 are more closely aligned with the walls of the moulding cavity of the mould, thereby leading to reduced tolerances as no uncontrollable amounts of gas are introduced between the mould cavity of the mould and the injection moulded product during the injection moulding cycle.

It is further also clear that, alternative embodiments for the injection moulding apparatus 150 are possible, as long as in general the injection moulding apparatus 150 comprises a mould 80 comprising a mould cavity 70 corresponding to the injection moulded product 10 similar as described above. This means that, thus in general the mould cavity 70 corresponds to an injection moulded product 10 comprising a wall 20 and, extending from said wall 20, at least one rib 30 or boss 40, whereby at least one rib 30 or boss 40 comprises a rib-to-wall thickness ratio 50 of up to at least 250%. Additionally it is clear that in general the injection moulding apparatus 150 is configured to perform the step of producing, by means of a variable temperature cycle moulding process 100 similar as mentioned above, the injection moulded product 10 without causing one or more sink marks 60 visible with the naked eye.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A method for producing an injection moulded product (10) comprising a wall (20) and, extending from said wall (20), at least one rib (30) or boss (40), said method comprising the step of producing by means of a variable temperature cycle moulding process (100) the injection moulded product (10) comprising at least one rib (30) or boss (40) with a rib-to-wall thickness ratio (50) of up to at least 250% without causing one or more sink marks (60) visible with the naked eye.

2. A method according to claim 1, wherein the step of the variable temperature cycle moulding process (100) does not cause one or more sink marks (60) of which the depth (62) exceeds 0,02 mm for the at least one rib (30) or boss (40) with a rib-to-wall thickness ratio (50) of up to at least 250%.

3. A method according to claim 1 or 2, wherein the step of the variable temperature cycle moulding process (100) does not cause one or more sink marks (60) of which the depth (62) exceeds 0,02 mm for the at least one rib (30) or boss (40) with a rib-to-wall thickness ratio (50) in the range of 150% to 250% or higher.

4. A method according to any of the preceding claims, wherein the variable temperature cycle moulding process (100) comprises an injection moulding cycle (110) comprising the following consecutive phases:
- a pre-injection phase (112) before molten thermoplastic material (120) is injected in a mould cavity (70) of a mould (80) for forming the moulded product (10);
- an injection phase (114) during which molten thermoplastic material (120) is injected in the mould cavity (70) of the mould (80)
- a cooling phase (116) during which the thermoplastic material (120) injected in the mould cavity (70) of the mould (80) is allowed to at least partially set.
- an ejection phase (118) during which the at least partially set thermoplastic material is ejected from the mould cavity (70) of the mould (80),
whereby heating and cooling elements (90) are arranged in the mould in the vicinity of the mould cavity (70) configured to controllably heat and cool the mould (80) during the injection moulding cycle (110), such that:
- during the pre-injection phase (112) the heating elements (90) heat the mould (80) to a temperature of at least a high temperature threshold (92);
- during at least a part of the injection phase (114) the heating elements (90) keep the mould (80) at a temperature above the high temperature threshold (92)
- during the cooling phase (116) the cooling elements (90) cool the mould to a temperature of at least a low temperature threshold (94).

5. A method according to claim 4, wherein the injection moulding cycle makes use of one or more of the following operational parameters:
- the duration of the pre-injection phase (112) is in the range of 3s to 35s;
- the duration of the injection phase (114) is in the range of 2,5s to 5s;
- the duration of the cooling phase (116) is in the range of 10s to 35s;
- the duration of the ejection phase (118) is in the range of 1 s to 20s;
- the high temperature threshold (92) is the glass transition temperature of the thermoplastic material (120) increased by at least 5°C, preferably increased by a value in the range of 10°C to 15°C or more;
- the low temperature threshold (94) is the glass transition temperature of the thermoplastic material (120) decreased by at least 10°C, preferably decreased by a value in the range of 15°C to 40°C or more.

6. A method according to any of the preceding claims, wherein the heating and cooling elements are formed by means of channels (86) arranged in the mould (80) through which respectively:
- a cooling medium can flow when acting as cooling element, and
- a heating medium can flow when acting as heating element,
whereby the cooling medium preferably comprises water in its liquid state and the heating medium preferably comprises steam.

7. A method according to any of the preceding claims, wherein the thermoplastic material comprises one or more of the following:
- Polycarbonate or PC with or without additives;
- Acrylonitrile butadiene styrene or ABS with or without additives;
- A composition comprising polycarbonate and Acrylonitrile butadiene styrene with or without additives or a PC/ABS composition;
- Styrene acrylonitrile copolymers or SAN
- A composition comprising polycarbonate and acrylonitrile butadiene styrene with or without additives or a PC/ABS composition;
- A composition comprising polycarbonate and polyethylene terephthalate with or without additives or a PC/PET composition;
- A composition comprising polybutylene terephthalate and polyethylene terephthalate with or without additives;
- Polyamide or PA;
- Polystyrene or PS;
- Polypropylene or PP;
- Polyoxymethylene or POM;
- Poly(methyl methacrylate) or PMMA;
- Acrylonitrile Styrene Acrylate or ASA;
- Poly(p-phenylene oxide) or poly(p-phenylene ether) or PPE;
- EMERGE PC/ABS 7570 Advanced Resin as manufactured by Trinseo;
- EMERGE PC 8702-15 Advanced Resin as manufactured by Trinseo;
- EMERGE PC/ABS 7700 Advanced Resin as manufactured by Trinseo.

8. A method according to any of the preceding claims, wherein the moulded product (10) comprises an exterior side (12) and an opposing interior side (14) from which the at least one rib (30) or boss (40) extends, and
wherein no sink marks visible to the naked eye are caused by the method at both the exterior side (12) and the interior side (14), and
wherein the mould (80) comprises a first mould part (82) comprising a first mould cavity part (72) of the mould cavity (70) for the exterior side (12) and a second mould part (84) comprising a second mould cavity part (74) of the mould cavity (70) for the interior side (14).

9. A method according to claim 8, wherein the at least one rib (30) or boss (40) only extends from the wall (20) at the interior side (26), and wherein at the exterior side (24) of the wall (20) comprises a smooth, continuous surface without extensions which extend more than 5% from surrounding surface.

10. A method according to any of the claims 8 or 9, when dependent on claim 6, wherein the channels (86) are arranged in the first mould part (82) and/or the second mould part (84) at a maximum distance of 15 mm of the mould cavity (70), preferably at a distance of 5 mm; and/or
wherein the first mould part (82) and/or the second mould part (84) comprising the channels (86) are manufactured by means of an additive manufacturing process, preferably a three dimensional printing process.

11. A method according to any of the preceding claims, wherein the method does not comprise one or more of the following steps:
- applying a negative pressure to the thermoplastic material during at least a part of the injection moulding cycle;
- maintaining a controlled temperature differential between the first mould part (82) and the second mould part (84) during at least a part of the injection moulding cycle;
- introducing a pressurized gas into the mould cavity during at least a part of the injection moulding cycle;
- introduce one or more cavities into the injection moulded product (10) by means of a gas or foam during the injection moulding cycle.

12. A method according to any of the preceding claims, wherein the injection moulded product (10) comprises one or more of the dimensional parameters:
- the wall thickness (22) of the wall (20) in the range of 0,6 mm to 15 mm, for example in the range of 1,5 mm to 5 mm, preferably in the range of 2 to 3 mm;
- the variation of the wall thickness (22) of the wall (20) with respect to the average wall thickness (22) of the wall (20) is less than 50%, preferably less than 5%;
- the distance (33) over which the rib (30) or boss (40) extends from the wall (20) is larger than 200%, preferably larger than 300%, for example 500% of the wall thickness (22) of the wall (20).

13. A method according to any of the preceding claims, wherein:
- the wall thickness (22) of the wall (20) at the location of a rib (30) or boss (40) is determined by the transverse distance between an exterior side (24) and an interior side (26) of the wall (20) at the base of the rib (30) or boss (40); and
- the wall thickness (32, 42) of the rib (30) or the boss (40) is determined as the transverse distance between both opposing sides (34, 36) of the rib (30) which extend from the wall (20) or the distance between an internal and opposing external face (44, 46) of the boss (40) which extend from the wall (20).

14. A method according to any of the preceding claims, wherein the ratio of the wall thickness (32, 42) of the rib (30) or boss (40) versus the wall thickness (22) of the wall (20) at a neighbouring location where the rib (30) or boss (40) is no longer present defines a rib-to-wall thickness ratio (50).

15. An injection moulded product manufactured according to the method according to any of the preceding claims, wherein the injection moulded product (10) comprises:
- at least one rib (30)or boss (40) with a rib-to-wall thickness ratio (50) of up to at least 250%; and
- no corresponding sink marks (60) visible with the naked eye.
